# EUROPEAN PATENT SPECIFICATION

(11) **EP 2 728 208 B1**
(45) Date of publication and mention of the grant of the patent: **07.06.2017**
(21) Application number: 13158955.8
(22) Date of filing: 13.03.2013
(51) Int. Cl.: F16B 21/16, F16B 21/18, G06F 1/16, H01L 21/67

(54) **Coaxially tightening automatic lock**
Koaxial anziehende automatische Verriegelung
Verrouillage automatique à serrage coaxial

(30) Priority: 01.11.2012 CN 201210429454
(43) Date of publication of application: 07.05.2014
(73) Proprietor: Kindwin Opto Electronic (Shen Zhen) Co. Ltd., Shenzhen, Guangdong 518111 (CN)
(72) Inventor: Ou, Daniel, Shenzhen Guangdong 518111 (CN)
(74) Representative: Office Kirkpatrick

(56) References cited:
- DE-A1- 2 723 652
- JP-A- 2006 138 469
- US-A- 2 559 464
- US-A- 2 896 287
- US-A- 4 691 889

## Description

### BACKGROUND

### Technical Field

The present invention relates to the field of a joining lock member, and more particularly to a coaxially tightening automatic lock used for assembling an LED screen.

### Related Art

Document JP 2006 138469 A discloses a coaxially tightening automatic lock comprising: a top plate and a bottom plate, a connecting lock device fixed on a surface of the bottom plate, the connecting lock device comprising: a flange, a lock cover, a lock core disposed in a cavity at an upper end of the flange, and a lock piece, a knock pin, and a rotating handle.

Generally, a mounting lock member is not convenient to use, and requires coordination of two persons when used in the assembly of a product, which is difficult to use and wastes time and manpower. Since the center of gravity of the product is difficult to find due to the fixing position of the lock member, a cambered surface may easily occur after the assembly of the product. In addition, the lock member generally has no pitch adjustment function, so that seams occur after the assembly of the product, which affects the aesthetic feeling of the appearance of the product.

### SUMMARY

To solve the defects in the prior art, the present invention provides a coaxially tightening automatic lock.

A technical solution adopted by the present invention is to design a coaxially tightening automatic lock, which includes: a hollow connecting rod, a top plate and a bottom plate respectively mounted on two ends of the connecting rod, a connecting lock device mounted on a lower end of the connecting rod and fixed on a surface of the bottom plate, the connecting lock device including: a flange connected to the bottom of the connecting rod, a lock cover sleeved on an outer wall of the flange, a lock core disposed in a cavity at an upper end of the flange, and a lock piece disposed between a lower end of the flange and an open slot in the surface of the bottom plate, a knock pin mounted in a hollow cavity at an upper end of the connecting rod, and a rotating handle sleeved on an outer wall at the upper end of the connecting rod.

The bottom of the connecting rod has a threaded connecting pin which extends from a hollow tube and is fixed thereto. The connecting pin is fixedly connected to the upper end of the flange in a threaded manner.

A first retaining ring is disposed on an upper edge of the lock cover, the retaining ring and the lock cover are sleeved on the outer wall of the flange, the retaining ring is fixedly connected to the flange with screws, and the lower end of the flange is fixedly connected to the bottom plate with screws.

Two long-circular grooves are disposed along a diameter direction on a bottom annular surface of the flange, and four trapezoidal holes are opened therein.

A pillar is disposed on an upper surface of the lock piece, and extends into the long-circular groove of the flange. A retaining piece is disposed on a lower surface of the lock piece, and a first spring is provided between an inner wall of the open slot in the surface of the bottom plate at the lower end of the flange and the retaining piece. A second spring is provided between the cavity at the upper end of the flange and a top end of the lock core.

The knock pin has a sharp tip, an annular groove is disposed at a certain position below the sharp tip, a rectangular through-hole is opened below the groove, a threaded block is loaded in the rectangular hole, and a guide-rail groove is opened at the upper end of the connecting rod and at a position corresponding to the rectangular hole. The threaded block is a cuboid, two symmetrical side surfaces of which are threaded circular-arc surfaces, and the width of the threaded block is greater than the diameter of the knock pin and that of the connecting rod. The rotating handle is a hollow rod, an inner wall of which is provided with a thread fitting the threaded block, and an outer wall at the bottom of the rotating handle is in the shape of a hexagonal bolt. A disk is fixedly disposed on the top end of the connecting rod, a second retaining ring is fixedly connected to the outer wall at the upper end of the rotating handle, a pressing disk is mounted below the retaining ring, and the pressing disk is fixed on a bottom surface of the top plate with screws.

The lock cover is rotatable about a vertical axial line, and has an upper column with multiple vertical ribs disposed on a surface thereof and a lower disk with a first flag slot, a second flag slot and a third flag slot sequentially disposed on an upper surface thereof at equal intervals. A reference flag slot is disposed on the surface of the bottom plate and at a position corresponding to the flag slot. Two drive grooves and two annular grooves are disposed on a bottom surface of the lower disk of the lock cover, and two pillars on the upper surface of the lock piece respectively extend into the two drive grooves. When the lock cover is rotated till the first flag slot, the second flag slot and the third flag slot are respectively aligned with the reference flag slot, the two pillars are respectively placed at a first position, a second position and a third position in the drive grooves.

Through-holes for weight reduction are disposed on the surfaces of the top plate and the bottom plate, and trapezoidal holes of the same size for allowing connecting lines to pass through are respectively provided along the axial line in the top plate and the bottom plate.

Compared with the prior art, through the coaxial design and the design of the connecting lock device in the present invention, a cambered surface is prevented from occurring after the assembly of a product, seamless joint of the product is achieved, the operation is convenient, and the cost of the assembly is reduced.

### BRIEF DESCRIPTION OF THE DRAWINGS

The disclosure will become more fully understood from the detailed description given herein below for illustration only, and thus are not limitative of the disclosure, and wherein:
FIG. 1 is a schematic three-dimensional view of an embodiment of the present invention;
FIG. 2 is a partial cross-sectional view of the embodiment shown in FIG. 1;
FIG. 3 is a schematic three-dimensional view of a knock pin according to the embodiment in FIG. 1;
FIG. 4 is a schematic view of a bottom surface of a lock cover according to the embodiment in FIG. 1;
FIG. 5 is a top view of a flange according to the embodiment in FIG. 1; and
FIG. 6 is a partial cross-sectional view of an upper end of a connecting rod according to the embodiment in FIG. 1.

### DETAILED DESCRIPTION

The present invention is illustrated in detail below with the accompanying drawings and embodiments.

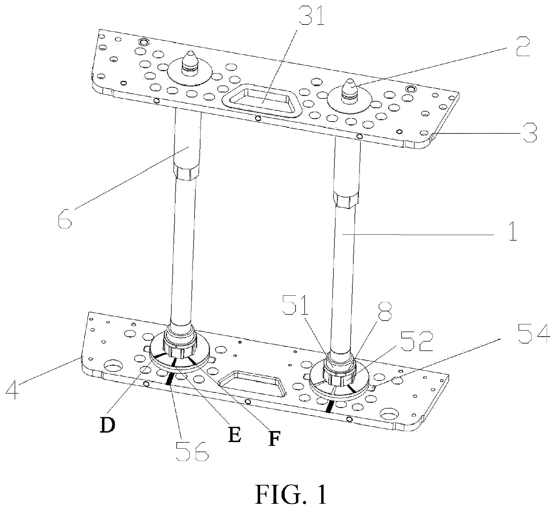

FIG. 1 is a schematic three-dimensional view of an embodiment of the present invention. In this embodiment, a coaxially tightening automatic lock includes: a hollow connecting rod 1, a top plate 3 and a bottom plate 4 respectively mounted on two ends of the connecting rod, a connecting lock device mounted on a lower end of the connecting rod and fixed on a surface of the bottom plate, the connecting lock device including: a flange 51 connected to the bottom of the connecting rod, a lock cover 52 sleeved on an outer wall of the flange, a lock core 53 disposed in a cavity at an upper end of the flange, and a lock piece 54 disposed between a lower end of the flange and an open slot in the surface of the bottom plate, a knock pin 2 mounted in a hollow cavity at an upper end of the connecting rod, and a rotating handle 6 sleeved on an outer wall at the upper end of the connecting rod.

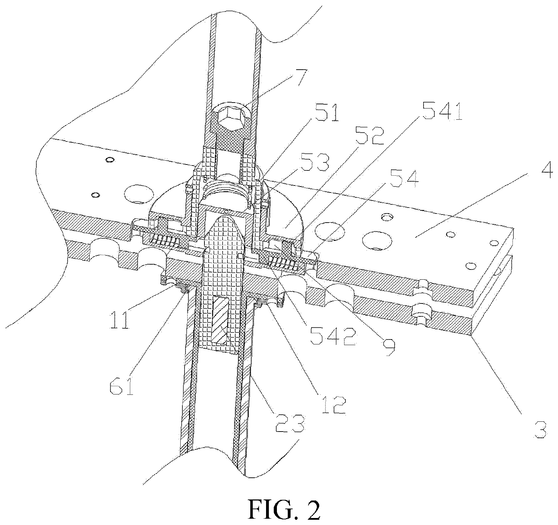

Referring to FIG. 2, the bottom of the connecting rod has a threaded connecting pin 7 which extends from a hollow tube and is fixed thereto. The connecting pin is fixedly connected to the upper end of the flange 51 in a threaded manner. A first retaining ring 8 is disposed on an upper edge of the lock cover, the retaining ring and the lock cover are sleeved on the outer wall in the middle of the flange 51, the retaining ring is fixedly connected to the flange with screws, and the lower end of the flange is fixedly connected to the bottom plate 4 with screws.

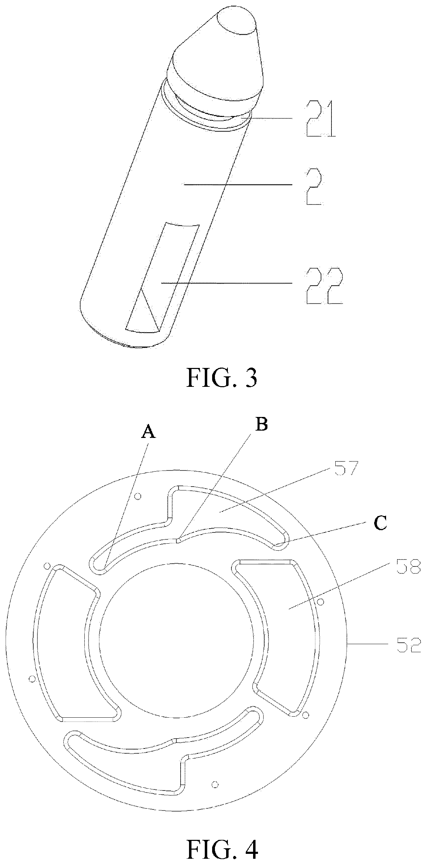

Referring to FIG. 1, FIG. 2 and FIG. 4, the lock cover 52 is rotatable about a vertical axial line, and has an upper column with multiple vertical ribs disposed on a surface thereof and a lower disk with a first flag slot D, a second flag slot E and a third flag slot F sequentially disposed on an upper surface thereof at equal intervals. A reference flag slot 56 is disposed on the surface of the bottom plate 4 and at a position corresponding to the flag slot. Two drive grooves 57 and two annular grooves 58 are disposed on a bottom surface of the lower disk of the lock cover, and two pillars 541 on the upper surface of the lock piece 54 respectively extend into the two drive grooves 57. Referring to FIG. 1 and FIG. 4, when the lock cover is rotated till the first flag slot D, the second flag slot E and the third flag slot F are respectively aligned with the reference flag slot 56, the two pillars 541 on the lock piece are respectively placed at a first position A, a second position B and a third position C in the drive grooves 57.

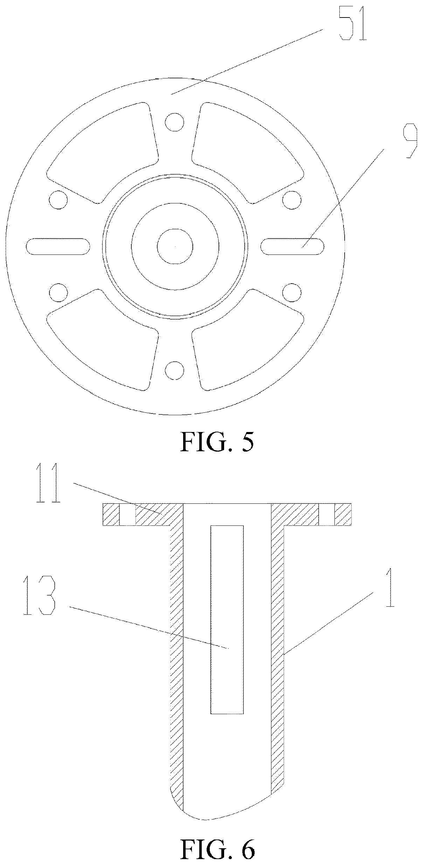

Referring to FIG. 2 and FIG. 5, two long-circular grooves 9 are disposed along a diameter direction on a bottom annular surface of the flange, and four trapezoidal holes are opened therein. The two pillars 541 disposed on the upper surface of the lock piece 54 respectively extend upward from the two long-circular grooves. Two retaining pieces 542 are disposed on a lower surface of the lock piece, and a first spring is provided between the retaining piece and an inner wall of the open slot in the surface of the bottom plate 4 at the lower end of the flange. A second spring is provided between the cavity at the upper end of the flange and a top end of the lock core 53.

Referring to FIG. 2, FIG. 3 and FIG. 6, the knock pin 2 extends from the hollow tube at the upper end of the connecting rod and passes through the top plate 3. The knock pin has a sharp tip, an annular groove 21 is disposed at a certain position below the sharp tip, a rectangular through-hole 22 is opened below the groove, and a guide-rail groove 13 is opened at the upper end of the connecting rod and at a position corresponding to the rectangular hole. A cubic threaded block 23, two symmetrical side surfaces of which are threaded circular-arc surfaces, passes through the guide-rail groove 13 and the rectangular hole 22, and the width of the threaded block is greater than the diameter of the knock pin 2 and that of the connecting rod 1. The rotating handle 6 sleeved on the outer wall at the upper end of the connecting rod is a hollow rod, an inner wall of which is provided with a thread fitting the threaded block 23, and an outer wall at the bottom of the rotating handle is in the shape of a hexagonal bolt.

Referring to FIG. 2, a disk 11 is fixedly disposed on the top end of the connecting rod 1, a second retaining ring 61 is fixedly connected to the outer wall at the upper end of the rotating handle 6, a pressing disk 12 is mounted below the retaining ring, the pressing disk presses against the disk and is fixed on a bottom surface of the top plate with screws, and meanwhile the pressing disk enables the second retaining ring to be rotatably fixed in a groove thereof.

Referring to FIG. 1, in an embodiment of the present invention, through-holes for weight reduction are disposed on the surfaces of the top plate 3 and the bottom plate 4, and trapezoidal holes 31 of the same size for allowing connecting lines to pass through are respectively provided along the axial line in the top plate and the bottom plate.

In the application, the lock cover is rotated clockwise, so that the third flag slot F in the lock cover is aligned with the reference flag slot 56 in the bottom plate, the lock piece is opened, and the pillars are placed at the third position C in the drive grooves 57. The lock cover is then rotated anticlockwise, so that the second flag slot E in the lock cover is aligned with the reference flag slot in the bottom plate, the pillars are placed at the second position B in the drive grooves, and the lock is in a ready mode.

When the knock pin 2 is inserted into the lock hole and the distance between the top plate and the bottom plate reaches a set value, the lock piece is automatically closed. The lock cover is then rotated anticlockwise, so that the first flag slot D in the lock cover is aligned with the reference flag slot in the bottom plate, the pillars are placed at the first position A in the drive grooves, and the lock is in a locked mode. In the locked mode, the handle is rotated clockwise to fasten the bottom plate and the top plate, and meanwhile the outer wall, which is in the shape of a hexagonal bolt, at the bottom of the handle is clamped and rotated by a tool such as a spanner to enhance the locking between the bottom plate and the top plate.

In the locked mode, the handle needs to be rotated anticlockwise to release the bottom plate and the top plate, and the lock cover is then rotated clockwise, so that the third flag slot F in the lock cover is aligned with the reference flag slot in the bottom plate, the lock piece is separated, the lock is opened, and the knock pin can be withdrawn from the lock hole.

In the actual application, for example, in the locking of an LED screen during the assembly, single pieces of the LED screen are placed between the top plate and the bottom plate of the lock device, and the multiple combining units are joined and fastened to each other according to the above connecting and locking process, to obtain the desired LED screen, where cables are wired through the trapezoidal holes in the top plate and the bottom plate at the back of the screen.

Through the coaxial design and the design of the connecting lock device in the present invention, a cambered surface is prevented from occurring after the assembly of a product, seamless joint of the product is achieved, the operation is convenient, and the cost of the assembly is reduced.

## Claims

1. A coaxially tightening automatic lock, comprising: a hollow connecting rod (1), a top plate (3) and a bottom plate (4) respectively mounted on two ends of the connecting rod (1), a connecting lock device mounted on a lower end of the connecting rod (1) and fixed on a surface of the bottom plate (4), the connecting lock device comprising: a flange (51) connected to the bottom of the connecting rod (1), a lock cover (52) sleeved on an outer wall of the flange (51), a lock core (53) disposed in a cavity at an upper end of the flange (51), and a lock piece (54) disposed between a lower end of the flange (51) and an open slot in the surface of the bottom plate (4), a knock pin (2) mounted in a hollow cavity at an upper end of the connecting rod (1), and a rotating handle (6) sleeved on an outer wall at the upper end of the connecting rod (1).

2. The coaxially tightening automatic lock according to claim 1, **characterized in that** the bottom of the connecting rod (1) has a threaded connecting pin (7) which extends from a hollow tube and is fixed thereto, and the connecting pin (7) is fixedly connected to the upper end of the flange (51) in a threaded manner.

3. The coaxially tightening automatic lock according to any preceding claim, **characterized in that** a first retaining ring (8) is disposed on an upper edge of the lock cover (52), the retaining ring and the lock cover are sleeved on the outer wall of the flange (51), the retaining ring is fixedly connected to the flange (51) with screws, and the lower end of the flange (51) is fixedly connected to the bottom plate (4) with screws.

4. The coaxially tightening automatic lock according to any preceding claim, **characterized in that** two long-circular grooves (9) are disposed along a diameter direction on a bottom annular surface of the flange (51), and four trapezoidal holes are opened therein.

5. The coaxially tightening automatic lock according to any preceding claim, **characterized in that** a pillar (541) is disposed on an upper surface of the lock piece (54) and extends into the long-circular groove (9) of the flange (51), a retaining piece (542) is disposed on a lower surface of the lock piece and a first spring is provided between an inner wall of the open slot in the surface of the bottom plate (4) at the lower end of the flange (51) and the retaining piece, and a second spring is provided between the cavity at the upper end of the flange (51) and a top end of the lock core (53).

6. The coaxially tightening automatic lock according to any preceding claim, **characterized in that** the knock pin (2) has a sharp tip, an annular groove (21) is disposed at a certain position below the sharp tip, a rectangular through-hole (22) is opened below the groove, a threaded block (23) is loaded in the rectangular hole, and a guide-rail groove (13) is opened at the upper end of the connecting rod (1) and at a position corresponding to the rectangular hole.

7. The coaxially tightening automatic lock according to claim 6, **characterized in that** the threaded block (23) is a cuboid, two symmetrical side surfaces of which are threaded circular-arc surfaces, and the width of the threaded block is greater than the diameter of the knock pin (2) and that of the connecting rod (1).

8. The coaxially tightening automatic lock according to any preceding claim, **characterized in that** the rotating handle is a hollow rod, an inner wall of which is provided with a thread fitting the threaded block, and an outer wall at the bottom of the rotating handle is in the shape of a hexagonal bolt; a disk (11) is fixedly disposed on the top end of the connecting rod (1), a second retaining ring (61) is fixedly connected to the outer wall at the upper end of the rotating handle (6), a pressing disk (12) is mounted below the retaining ring, and the pressing disk is fixed on a bottom surface of the top plate (3) with screws.

9. The coaxially tightening automatic lock according to any preceding claim, **characterized in that** the lock cover (52) is rotatable about a vertical axial line, and has an upper column with multiple vertical ribs disposed on a surface thereof and a lower disk with a first flag slot D, a second flag slot E and a third flag slot F sequentially disposed on an upper surface thereof at equal intervals; a reference flag slot (56) is disposed on the surface of the bottom plate (4) and at a position corresponding to the flag slot; two drive grooves (57) and two annular grooves (58) are disposed on a bottom surface of the lower disk of the lock cover (52), and the two pillars (541) on the upper surface of the lock piece (54) respectively extend into the two drive grooves (57); and when the lock cover (52) is rotated till the first flag slot D, the second flag slot E and the third flag slot F are respectively aligned with the reference flag slot (56), the two pillars (541) are respectively placed at a first position A, a second position B and a third position C in the drive grooves (57).

10. The coaxially tightening automatic lock according to any preceding claim, **characterized in that** through-holes for weight reduction are disposed on the surfaces of the top plate (3) and the bottom plate (4), and trapezoidal holes (31) of the same size for allowing connecting lines to pass through are respectively provided along the axial line in the top plate and the bottom plate (4).

## Patentansprüche

1. Sich koaxial zuziehende automatische Sperre, die umfasst: eine hohle Verbindungsstange (1), eine obere Platte (3) und eine untere Platte (4), die jeweils an zwei Enden der Verbindungsstange (1) angebracht sind, eine Verbindungssperrvorrichtung, die an einem unteren Ende der Verbindungsstange (1) angebracht und auf einer Oberfläche der unteren Platte (4) fixiert ist, wobei die Verbindungssperrvorrichtung umfasst: einen Flansch (51), der mit dem Boden der Verbindungsstange (1) verbunden ist, eine Sperrenabdeckung (52), die an einer Außenwand des Flanschs (51) verhülst ist, einen Sperrenkern (53), der in einem Hohlraum an einem oberen Ende des Flanschs (51) angeordnet ist, und ein Sperrenstück (54), das zwischen einem unteren Ende des Flanschs (51) und einem offenen Schlitz in der Oberfläche der unteren Platte (4) angeordnet ist, einen Einschlagstift (2), der in einem Hohlraum an einem oberen Ende der Verbindungsstange (1) angebracht ist, und einen Drehgriff (6), der an einer Außenwand am oberen Ende der Verbindungsstange (1) verhülst ist.

2. Sich koaxial zuziehende automatische Sperre nach Anspruch 1, **dadurch gekennzeichnet, dass** der Boden der Verbindungsstange (1) einen Gewindeverbindungsstift (7) aufweist, der sich von einem Hohlrohr erstreckt und an diesem fixiert ist, und der Verbindungsstift (7) mit dem oberen Ende des Flanschs (51) fest gewindeverbunden ist.

3. Sich koaxial zuziehende automatische Sperre nach einem vorstehenden Anspruch, **dadurch gekennzeichnet, dass** ein erster Haltering (8) an einem oberen Rand der Sperrenabdeckung (52) angeordnet ist, der Haltering und die Sperrenabdeckung an der Außenwand des Flanschs (51) verhülst sind, der Haltering mit dem Flansch (51) fest schraubverbunden ist und das untere Ende des Flanschs (51) mit der unteren Platte (4) fest schraubverbunden ist.

4. Sich koaxial zuziehende automatische Sperre nach einem vorstehenden Anspruch, **dadurch gekennzeichnet, dass** zwei kreisförmige Längsnuten (9) entlang einer Durchmesserrichtung auf einer unteren ringförmigen Oberfläche des Flanschs (51) angeordnet ist und vier trapezförmige Löcher darin geöffnet sind.

5. Sich koaxial zuziehende automatische Sperre nach einem vorstehenden Anspruch, **dadurch gekennzeichnet, dass** ein Pfeiler (541) auf einer oberen Oberfläche des Sperrenstücks (54) angeordnet ist und sich in die kreisförmige Längsnut (9) des Flanschs (51) erstreckt, ein Haltestück (542) auf einer unteren Oberfläche des Sperrenstücks angeordnet ist und eine erste Feder zwischen einer Innenwand des offenen Schlitzes in der Oberfläche der unteren Platte (4) am unteren Ende des Flanschs (51) und dem Haltestück bereitgestellt ist und eine zweite Feder zwischen dem Hohlraum am oberen Ende des Flanschs (51) und einem oberen Ende des Sperrenkerns (53) bereitgestellt ist.

6. Sich koaxial zuziehende automatische Sperre nach einem vorstehenden Anspruch, **dadurch gekennzeichnet, dass** der Einschlagstift (2) eine scharfe Spitze aufweist, eine ringförmige Nut (21) in einer gewissen Position unterhalb der scharfen Spitze angeordnet ist, ein rechteckiges Durchgangsloch (22) unterhalb der Nut geöffnet ist, ein Gewindeblock (23) in das rechteckige Loch eingeführt ist und eine Führungsschienennut (13) am oberen Ende der Verbindungsstange (1) und in einer Position, die dem rechteckigen Loch entspricht, geöffnet ist.

7. Sich koaxial zuziehende automatische Sperre nach Anspruch 6, **dadurch gekennzeichnet, dass** der Gewindeblock (23) ein Quader ist, zwei symmetrische Seitenflächen dieses kreisbogenförmige Gewindeoberflächen sind und die Breite des Gewindeblocks größer als der Durchmesser des Einschlagstifts (2) und der Verbindungsstange (1) ist.

8. Sich koaxial zuziehende automatische Sperre nach einem beliebigen Anspruch, **dadurch gekennzeichnet, dass** der Drehgriff eine Hohlstange ist, eine Innenwand dieser mit einem Gewinde versehen ist, das zum Gewindeblock passt, und eine Außenwand am Boden des Drehgriffs die Form eines hexagonalen Bolzens hat; eine Scheibe (11) am oberen Ende der Verbindungsstange (1) fest angeordnet ist, ein zweiter Haltering (61) mit der Außenwand am oberen Ende des Drehgriffs (6) fest verbunden ist, eine Druckscheibe (12) unterhalb des Halterings angebracht ist und die Druckscheibe (12) an einer unteren Oberfläche der oberen Platte (3) mit Schrauben fixiert ist.

9. Sich koaxial zuziehende automatische Sperre nach einem vorstehenden Anspruch, **dadurch gekennzeichnet, dass** die Sperrenabdeckung (52) um eine vertikale Achsenlinie drehbar ist und eine obere Säule mit mehreren vertikalen Rippen aufweist, die auf einer Oberfläche dieser angeordnet sind, und eine untere Scheibe mit einem ersten Markierungsschlitz D, einem zweiten Markierungsschlitz E und einem dritten Markierungsschlitz F aufweist, die sequentiell auf einer oberen Oberfläche davon in gleichmäßigen Intervallen angeordnet sind; ein Referenzmarkierungsschlitz (56) auf der Oberfläche der unteren Platte (4) und in einer Position, die dem Markierungsschlitz entspricht, angeordnet ist; zwei Antriebsnuten (57) und zwei ringförmige Nuten (58) auf einer unteren Oberfläche der unteren Scheibe der Sperrenabdeckung (52) angeordnet sind und die zwei Pfeiler (541) auf der oberen Oberfläche des Sperrenstücks (54) sich jeweils in die zwei Antriebsnuten (57) erstrecken; und wenn die Sperrenabdeckung (52) bis zum ersten Markierungsschlitz D gedreht wird, der zweite Markierungsschlitz E und der dritte Markierungsschlitz F jeweils mit dem Referenzmarkierungsschlitz (56) ausgerichtet sind, die zwei Pfeiler (541) jeweils in einer ersten Position A, einer zweiten Position B und einer dritten Position C in den Antriebsnuten (57) platziert sind.

10. Sich koaxial zuziehende automatische Sperre nach einem vorstehenden Anspruch, **dadurch gekennzeichnet, dass** Durchgangslöcher für eine Gewichtsverringerung auf den Oberflächen der oberen Platte (3) und der unteren Platte (4) angeordnet sind und trapezförmige Löcher (31) der gleichen Größe, die ermöglichen, dass Verbindungsleitungen diese passieren, jeweils entlang der axialen Line in der oberen Platte und der unteren Platte (4) bereitgestellt sind.

## Revendications

1. Verrouillage automatique à serrage coaxial comprenant : une tige creuse de raccordement (1), une plaque supérieure (3) et une plaque inférieure (4), montées respectivement sur deux extrémités de la tige de raccordement (1), un dispositif de verrouillage de raccordement monté sur une extrémité inférieure de la tige de raccordement (1) et fixé sur une surface de la plaque inférieure (4), le dispositif de verrouillage de raccordement comprenant : une bride (51) raccordée au bas de la tige de raccordement (1), un recouvrement de verrouillage (52) recouvrant une paroi externe de la bride (51), un noyau de verrouillage (53) disposé dans une cavité à l'extrémité supérieure de la bride (51), une pièce de verrouillage (54) disposée entre l'extrémité inférieure de la bride (51) et une fente ouverture dans la surface de la plaque inférieure (4), une goupille (2) montée dans une cavité creuse à l'extrémité supérieure de la tige de raccordement (1) et une poignée tournante (6) recouvrant la paroi externe de l'extrémité supérieure de la tige de raccordement (1).

2. Verrouillage automatique à serrage coaxial selon la revendication 1, **caractérisé en ce que** le bas de la tige de raccordement (1) comporte une tige filetée d'assemblage (7) qui s'étend depuis le tube creux et y est fixée, la tige filetée d'assemblage (7) étant raccordée de façon fixe à l'extrémité supérieure à la bride (51) par le filetage.

3. Verrouillage automatique à serrage coaxial selon l'une quelconque des revendications précédentes, **caractérisé en ce qu'**une première bague de rétention (8) est disposée sur le bord supérieur du recouvrement de verrouillage (52), la bague de rétention et le recouvrement de verrouillage recouvrant la paroi externe de la bride (51), la bague de rétention étant raccordée de façon fixe à la bride (51) par des vis, et l'extrémité inférieure de la bride (51) étant raccordée de façon fixe à la plaque inférieure (4) par des vis.

4. Verrouillage automatique à serrage coaxial selon l'une quelconque des revendications précédentes, **caractérisé en ce que** deux fentes arrondies allongées (9) sont disposées le long d'un axe de diamètre sur une surface inférieure annulaire de la bride (51), et quatre orifices trapézoïdaux y sont ouverts.

5. Verrouillage automatique à serrage coaxial selon l'une quelconque des revendications précédentes, **caractérisé en ce qu'**un pilier (541) et disposé sur la surface supérieure de la pièce de verrouillage (54) et s'étend dans la fente arrondie allongée (9) de la bride (51), une pièce de rétention (542) étant disposée sur la surface inférieure de la pièce de verrouillage et un premier ressort étant disposé entre une paroi interne de la fente ouverte à la surface de la plaque inférieure (4) à l'extrémité inférieure de la bride (51) et la pièce de rétention, et un deuxième ressort étant disposé entre la cavité à l'extrémité supérieure de la bride (51) et l'extrémité supérieure du noyau de verrouillage (53).

6. Verrouillage automatique à serrage coaxial selon l'une quelconque des revendications précédentes, **caractérisé en ce que** la goupille (2) est pointue, une fente annulaire (21) étant disposée à une certaine position sous la pointe, un orifice traversant rectangulaire (22) étant ouvert sous la fente, un bloc fileté (23) étant chargé dans l'orifice rectangulaire, et une fente guide rail (13) étant ouverture à l'extrémité supérieure de la tige de raccordement (1) et à une position correspondant à l'orifice rectangulaire.

7. Verrouillage automatique à serrage coaxial selon la revendication 6, **caractérisé en ce que** le bloc fileté (23) est en forme de cube, dont deux faces symétriques sont des surfaces filetées en arc de cercle, et la largeur du bloc fileté étant supérieure au diamètre de la goupille (2) et à celui de la tige de raccordement (1).

8. Verrouillage automatique à serrage coaxial selon l'une quelconque des revendications précédentes, **caractérisé en ce que** la poignée tournante (6) est une tige creuse, dont une paroi interne est munie d'un filetage en ajustement avec le bloc fileté, et une paroi externe en bas de la poigné tournant est en forme de boulon hexagonal ; un disque (11) est disposé de façon fixe sur l'extrémité supérieure de la tige de raccordement (1), une deuxième bague de rétention (61) est raccordée de façon fixe à la paroi externe à l'extrémité supérieure de la poignée tournante (6), un disque de pression (12) est monté sous la bague de rétention, et le disque de pression est fixé à la surface inférieure de la plaque supérieure (3) par des vis.

9. Verrouillage automatique à serrage coaxial selon l'une quelconque des revendications précédentes, **caractérisé en ce qu'**on peut faire tourner le recouvrement de verrouillage (52) autour d'une ligne axiale verticale, **en ce qu'**il comporte une colonne supérieure avec plusieurs rainures verticales disposées sur une de ses surfaces et comporte un disque inférieur avec une première fente repère D, une deuxième fente repère E et une troisième fente repère F disposées en consécutivement sur sa surface supérieure à intervalles égaux ; une fente repère de référence (56) est disposée sur la surface de la plaque inférieure (4) et à une position correspondant à la fente repère ; deux fentes de guidage (57) et deux fentes annulaires (58) sont disposées sur la surface inférieure du disque inférieur du recouvrement de verrouillage (52), et les deux piliers (541) sur la surface supérieure de la pièce de verrouillage (54) s'étendent respectivement dans les deux fentes de guidage (57) ; et quand on fait tourner le recouvrement de verrouillage (52) jusqu'à la première fente repère D, la deuxième fente repère E et la troisième fente repère F sont respectivement alignées sur la fente de référence (56), les deux piliers (541) sont respectivement placés sur une première position A, une deuxième position B et une troisième position C dans les fentes de guidage (57).

10. Verrouillage automatique à serrage coaxial selon l'une quelconque des revendications précédentes, **caractérisé en ce que** des orifices traversants de réduction de poids sont disposés sur les surfaces de la plaque supérieure (3) et de la plaque inférieure (4), et des orifices trapézoïdaux (31) de la même taille destinés à permettre aux lignes de raccordement de les traverser sont disposés respectivement le long de la ligne axiale dans la plaque supérieure et la plaque inférieure (4).
